# EUROPÄISCHE PATENTSCHRIFT

(11) **EP 1 984 582 B1**
(45) Veröffentlichungstag und Bekanntmachung des Hinweises auf die Patenterteilung: **07.01.2015**
(21) Anmeldenummer: 06818456.3
(22) Anmeldetag: 10.11.2006
(51) Int. Cl.: E04B 9/12

(54) **ABHÄNGBARE INNENRAUMDECKE UND DEREN TEILE**
HANGABLE INTERIOR CEILING AND PARTS THEREOF
PLAFOND INTÉRIEUR SUSPENDU ET ÉLÉMENTS COMPOSANT CELUI-CI

(30) Priorität: 16.02.2006 DE 202006002567 U
(43) Veröffentlichungstag der Anmeldung: 29.10.2008
(60) Teilanmeldung: 08017341.2
(73) Patentinhaber: Clarion Events Deutschland GmbH, 33607 Bielefeld (DE)
(72) Erfinder: MEYER, Peter, H., 33602 Bielefeld (DE); RUDOLPH, Horst, 33332 Gütersloh (DE)
(74) Vertreter: Von Rohr Patentanwälte Partnerschaft mbB
(86) Internationale Anmeldenummer: PCT/EP2006/010781
(87) Internationale Veröffentlichungsnummer: WO 2007/093204

(56) Entgegenhaltungen:
- BE-A- 562 799
- DE-A1- 19 709 823
- DE-U1- 29 503 377

## Beschreibung

Gegenstand der Erfindung ist eine abhängbare, nicht tragende Innenraumdecke mit den Merkmalen des Oberbegriffs von Anspruch 1, sowie ein Längsträger für eine solche Innenraumdecke gemäß dem Oberbegriff von Anspruch 11.

Eine aus der Praxis bekannte abhängbare Innenraumdecke ("ceiling system" der SURVEY MARKETING + CONSULTING GmbH & Co. KG, Dokumentation 2005), weist eine Längsrichtung der Decke definierende Längsträger und eine Querrichtung der Decke definierende, die Längsträger seitlich verbindende Querträger auf. Die Querträger werden von den Längsträgern getragen. Zur Abhängung der Längsträger von einer tragenden Decke sind langgestreckte Tragelemente vorgesehen. Das Achsmaß der Innenraumdecke beträgt bevorzugt 3,0 m.

Die Längsträger der bekannten Innenraumdecke bestehen aus jeweils zwei voneinander beabstandeten, vertikal ausgerichteten Spanplatten, die über horizontal ausgerichtete, miteinander verschraubte Verbinderplatten und eine verzinkte Verbindungsstange miteinander verbunden sind. An der Verbindungsstange befindet sich ein nach oben ragender Aufhängehaken. Mehrere solcher Verbindungsstangen befinden sich über die Länge eines Längsträgers verteilt an diesem. Die Längsträger sind mittels Zugankern, Drahtseilen oder Gurten an einer tragenden Decke zu befestigen. Bei den Querträgern handelt es sich um einfache, vertikal ausgerichtete Spanplatten, die über Befestigungswinkel an den Längsträgern eingehängt und verschraubt werden. An den oberen Innenrändern der Seitenwangen der Längsträger befindet sich Klettband zur werkzeuglosen Befestigung von Gewebestoffbahnen, die oberhalb der Längsträger quer gespannt sind, die von Längsträgem und Querträgern gebildeten Felder nach oben hin optisch abdecken und so den "Deckeneffekt" erbringen.

In manchen Ausführungen der bekannten abhängbaren Innenraumdecke sind die Längsträger ihrerseits an Hilti-Montageschienen, abgekanteten Profilschienen aus Stahl, aufgehängt

Die Elektroinstallation läuft zwischen den Seitenwangen der Längsträger. An den die Seitenwangen der Längsträger verbindenden Querträgern lassen sich Stromschienen für Strahler anschrauben. Zwischen den Längsträgern oder den Querträgern lassen sich Niedervolt-Seilsysteme anbringen.

Die bekannte abhängbare, nicht tragende Innenraumdecke, von der die Erfindung ausgeht (DE-A-197 09 823), weist Längsträger und Querträger in Form von relativ komplexen Strangpressprofilen aus Leichtmetall oder aus faserverstärktem Kunststoff auf. Geschlossene Hohlkammern in den Längsträgern und Querträgern erbringen deren Biegesteifigkeit. Nach außen offene Aufnahmen und Nuten dienen der Anbringung von notwendigem Montage- und Zusatzteilen, der Verlegung von Kabeln, der Verbindung oder anderweitiger Nutzung.

Die bekannte abhängbare Innenraumdecke ist auf die Besonderheiten einer hochgradig flüssigkeits- und gasdichten Reinraum-Deckenkonstruktion abgestimmt. Das macht die Besonderheiten dieser Innenraumdecke aus. Für normale Verhältnisse beispielsweise in Messehallen, in denen bis auf Besonderheiten der Reinraumtechnik nicht ankommt, kann die Konstruktion der Innenraumdecke einfacher ausfallen.

Der Lehre liegt daher das Problem zugrunde, die bekannte abhängbare Innenraumdecke sowie deren Längsträger und Querträger dahingehend zu verbessern, daß auch die elektrische Kabelverlegung und Anschlusstechnik sehr einfach ist.

Das zuvor aufgezeigte Problem ist für die abhängbare Innenraumdecke selbst durch die Merkmale des kennzeichnenden Teils von Anspruch 1 gelöst. Die obere Aufnahme des Längsträgers bildet in ihrem unteren Bereich einen Kabelkanal. Darüber können alle möglichen Befestigungsfunktionen vorliegen.

Bevorzugte Ausgestaltungen und Weiterbildungen dieser Innenraumdecke sind Gegenstand der Unteransprüche 2 bis 10.

Gegenstand der Erfindung ist auch ein Längsträger für eine Innenraumdecke gemäß der Erfindung. Dieser ist als solcher in Anspruch 11 beschrieben. Bevorzugte Ausgestaltungen und Weiterbildungen dieses Längsträgers sind Gegenstand der Ansprüche 12 bis 15.

Im Folgenden wird nun die Erfindung anhand einer lediglich Ausführungsbeispiele darstellenden Zeichnung näher erläutert. In der Zeichnung zeigt
- Fig. 1: in schematischer, perspektivischer Ansicht von unten eine Innenraumdecke gemäß der Erfindung,
- Fig. 2: in perspektivischer Ansicht ein Verbindungsprofil zur Verbindung von Längsträgern der Innenraumdecke aus Fig. 1,
- Fig. 3: in einer perspektivischen Ansicht von der Stirnseite her einen Längsträger für eine Innenraumdecke gemäß Fig. 1,
- Fig. 4: die Verbindung eines Längsträgers mit einem Querträger in drei Stufen des technischen Ablaufs (a, b, c),
- Fig. 5: in perspektivischer Ansicht einen Querträger für eine Innenraumdecke gemäß Fig. 1, in Fig. 5b eine Stirnplatte für einen solchen Querträger,
- Fig. 6: in einer perspektivischen Ansicht von der Stirnseite her einen Querträger gemäß Fig. 5a,
- Fig. 7: ein Tragelement für Träger einer Innenraumdecke gemäß Fig. 1 in perspektivischer Ansicht (a) sowie in verschiedenen Stationen der Verbindung mit einem Längsträger (b, c, d).

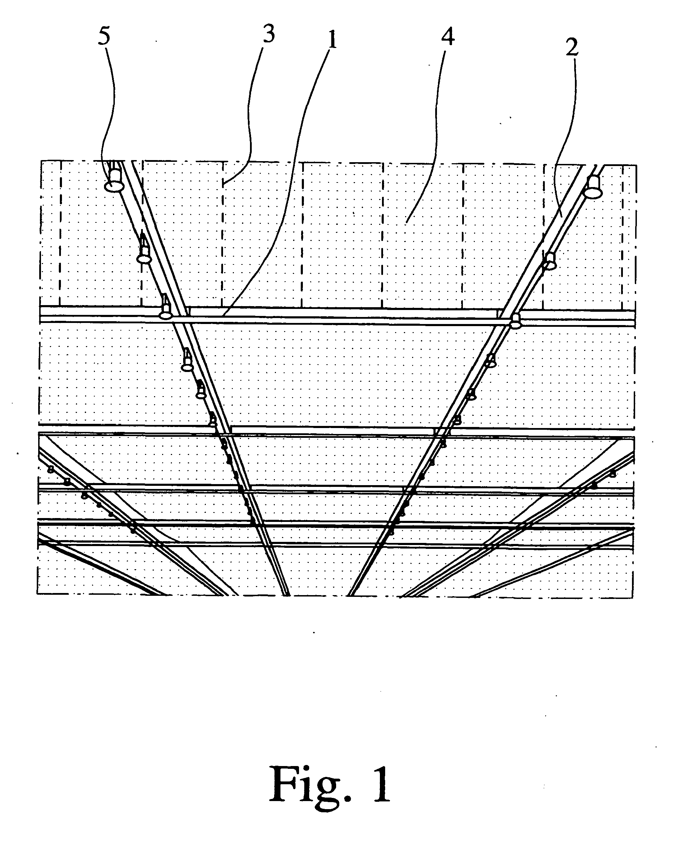

Die in Fig. 1 in einer perspektivischen Ansicht von unten und ausschnittweise dargestellte abgehängte, nicht tragende Innenraumdecke ist eine mobile Systemdecke für zeitlich begrenzten oder dauerhaften Einbau in Messehallen, Veranstaltungshallen, Verkaufsräumen, Verkehrseinrichtungen etc.. Sie wird aufgehängt an einer tragenden Decke (die in Fig. 1 nicht zu erkennen ist), dann handelt es sich um eine abgehängte, nicht tragende Innenraumdecke, sie kann aber auch mit Nutzung einer besonderen Variante der Erfindung auf Bodenstützen stehen, also aufgeständert angeordnet werden. Das ist insbesondere für sehr hohe Hallen eine interessante Alternative, insbesondere auch für den Messebau.

Die in Fig. 1 schematisch und zunächst einmal grundsätzlich dargestellte Innenraumdecke weist Längsträger 1 auf, die eine Längsrichtung der Innenraumdecke definieren. Im dargestellten Beispiel einer erfindungsgemäßen Innenraumdecke sind außerdem vorgesehen Querträger 2, die eine Querrichtung der Decke definieren und im dargestellten und bevorzugten Ausführungsbeispiel die Längsträger 1 seitlich verbinden. Grundsätzlich können, wie nachfolgend noch näher erläutert wird, die Längsträger 1 auch für sich eingesetzt werden. Jedenfalls ist es nicht unbedingt erforderlich, dass die Querträger 2 die Längsträger 1 seitlich miteinander verbinden. Im bevorzugten Ausführungsbeispiel ist das aber der Fall.

Die Längsträger 1 sind die tragenden Komponenten der Innenraumdecke, die Querträger 2 werden von den Längsträgern 1 getragen. Sofern die Längsträger 1 von einer Tragdecke abgehängt werden, erfolgt dies über langgestreckte Tragelemente 3, die in Fig. 1 verdeckt sind und daher nur gestrichelt angedeutet werden.

Die Darstellung in Fig. 1 macht ferner deutlich, dass der Deckencharakter dieser Anordnung aus Längsträgern 1 und Querträgern 2 dadurch erzielt wird, dass Gewebestoffbahnen 4 oberhalb von Längsträgern 1 und Querträgern 2 aufgelegt sind. Diese erstrecken sich zwischen in erster Linie den Längsträgern 1 und sind dort an den Längsträgern 1 vorzugsweise werkzeuglos befestigt. Das Achsmaß der Innenraumdecke wird durch die Querträger 2 im bevorzugten Ausführungsbeispiel auf etwa 3 m bemessen. Die Querträger 2 halten die Längsträger 1 auf Abstand in diesem Achsmaß, die Gewebestoffbahnen 4 können so dann sauber verspannt werden.

Zur werkzeuglosen Befestigung der Gewebestoffbahnen 4 an den Längsträgern 1 können beispielsweise Klettbandbefestigungen dienen. Statt der Gewebestoffbahnen 4 können auch Bahnen aus anderen Materialien, beispielsweise Kunststofffolien verwendet werden, beispielsweise aber auch Metallnetzbahnen. Interessant ist bei dieser Gestaltung der Innenraumdecke jedenfalls, dass oberhalb der Gewebestoffbahnen 4 angeordnete Leuchtmittel, beispielsweise Leuchtstoffröhren, ein diffuses Licht unter der Innenraumdecke im Nutzungsbereich entstehen lassen, also eine gewisse allgemeine Raumhelligkeit erbringen.

Bei der allgemeinen Übersichtsdarstellung in Fig. 1 erkennt man im übrigen, dass die Längsträger 1 und Querträger 2, hier in erster Linie die Querträger 2, als Träger für Strahler 5 genutzt werden, die zusätzlich zu der Grundhelligkeit bestimmte Beleuchtungseffekte zu erzielen erlauben. Dazu wird später noch einiges erläutert.

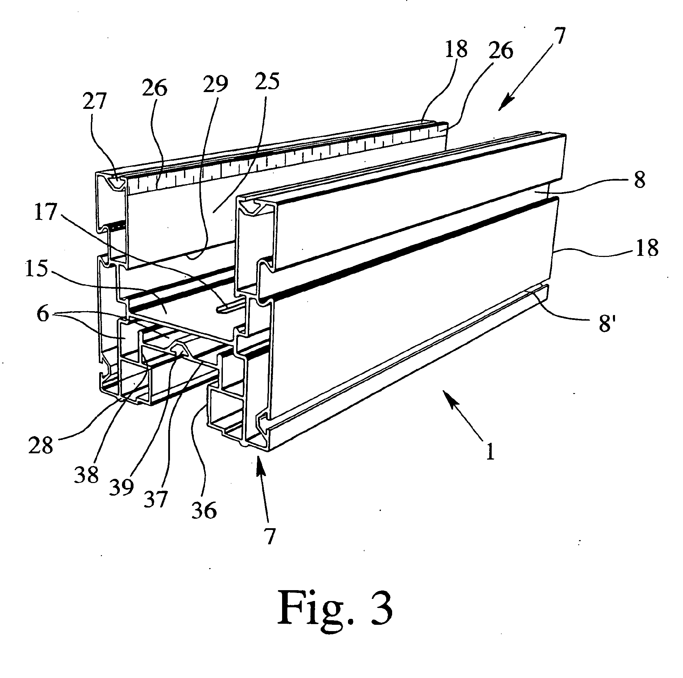

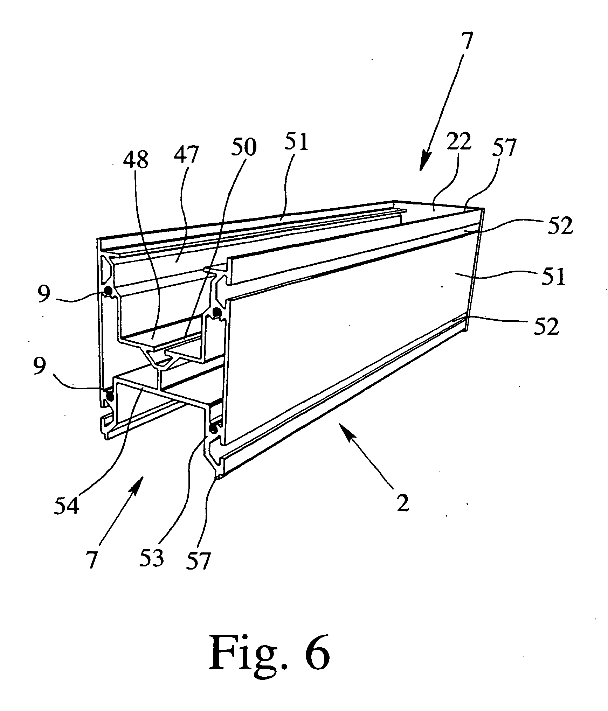

Aus den Fig. 3 und 6 erkennt man die besondere Gestaltung der Längsträger 1 und Querträger 2 der erfindungsgemäßen Innenraumdecke. Diese sind als Strangpressprofile aus Leichtmetall, insbesondere aus Aluminium ausgeführt. Grundsätzlich ist es auch möglich, die Profile aus einem faserverstärkten Kunststoff auszuführen, wenn die zu erwartenden Belastungen geringer sind und/oder geringere Spannweiten vorliegen.

Die Längsträger 1 und Querträger 2 weisen einerseits geschlossene Hohlkammern 6 zur Versteifung, andererseits nach außen offene Aufnahmen 7 und Nuten 8 zur Anbringung von Montage- und Zusatzteilen bzw. zu Verbindungszwecken auf. Darauf wird im einzelnen später eingegangen.

Die Fig. 3 und 6 der Zeichnung zeigen in perspektivischer Ansicht die Stirnseiten der Längsträger 1 und Querträger 2 und sind deshalb für Erläuterungen zu den Querschnitten der Längsträger 1 und Querträger 2 besonders geeignet.

Zunächst ist zu erkennen, dass die Strangpressprofile so gestaltet sind, dass die Längsträger 1 und die Querträger 2 Einschraubkanäle 9 kleinen Durchmessers aufweisen. Solche Einschraubkanäle 9 dienen dazu, selbstschneidende Schrauben zur Befestigung von Abschlusselementen, Stirnplatten o.dgl. einschrauben zu können. Ihr Durchmesser ist auf die Größe der vorgesehenen Schrauben abgestimmt. Das entspricht der üblichen Verfahrensweise bei Strangpressprofilen insbesondere aus Leichtmetall, aber auch aus Kunststoff.

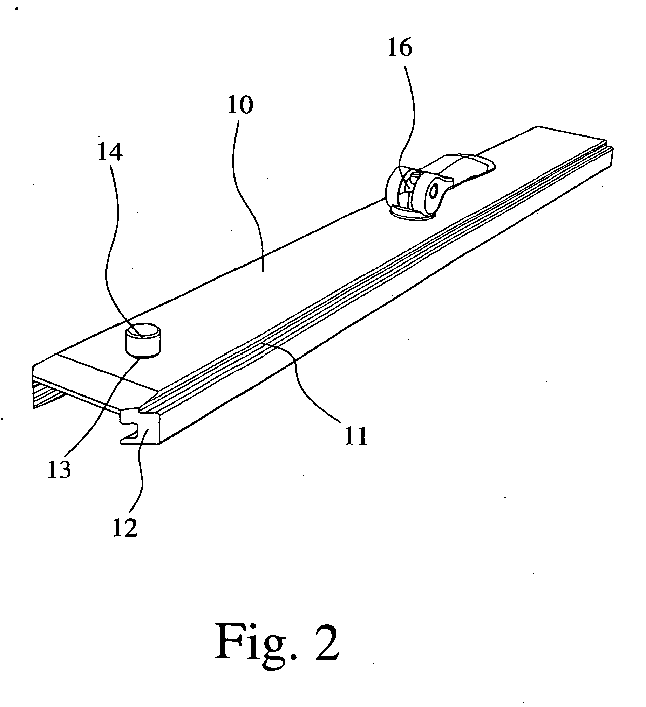

Eine Innenraumdecke der in Rede stehenden Art mit Längsträgern 1, die jeweils beispielsweise 6 m lang sind, bedarf natürlich einer Mehrzahl von in Längsrichtung hintereinander angeordneter Längsträger 1. Diese müssen untereinander vernünftig und belastbar verbunden werden. Nach einer bevorzugten Lehre der Erfindung erfolgt dies im vorliegenden Fall jeweils mittels eines sich in Längsrichtung innerhalb beider angrenzender Längsträger 1 erstreckenden Verbindungsprofils 10. Ein solches Verbindungsprofil 10 ist in Fig. 2 dargestellt. Es besteht im dargestellten, bevorzugten Ausführungsbeispiel ebenfalls aus Leichtmetall, insbesondere aus Aluminium, kann aber wiederum auch aus einem faserverstärkten Kunststoff bestehen, wenn die zu erwartenden Belastungsverhältnisse dies erlauben.

Das dargestellte und bevorzugte Verbindungsprofil 10 ist so gestaltet, daß es in die mittige, breite Hohlkammer 6 des Längsträgers 1 eingeschoben werden kann.

Fig. 2 zeigt verschiedene zweckmäßige Details eines Verbindungsprofils 10. Eine Führungsnut 11 dieses als Strangpressprofil aus Aluminium ausgeführten Verbindungsprofils 10 auf jeder Oberkante erleichtert das Einschieben in die Hohlkammer 6 des Längsträgers 1. Am vorderen Ende erkennt man Fasen 12, die ebenfalls das Einschieben in die Hohlkammer 6 des Längsträgers 1 erleichtern. Da das Verbindungsprofil 10 möglichst passgenau in der Hohlkammer 6 des Längsträgers 1 sitzen soll, um eine steife Verbindung der Längsträger 1 zu gewährleisten, sind solche Einschubhilfen von erheblicher Bedeutung.

Das Verbindungsprofil 10 besteht im dargestellten Ausführungsbeispiel aus eloxiertem Aluminium und weist mindestens eine Aufnahme 13 für einen Sicherungsstift 14 auf, hier ausgeführt als Gewindebohrung für den Sicherungsstift 14. Dadurch kann das Verbindungsprofil 10 in einem Längsträger 1 an einem bestimmten Ort festgelegt werden, wenn nämlich ein Quersteg 15 des Längsträgers 1 eine entsprechende, in der Zeichnung nicht dargestellte Aufnahme für den Sicherungsstift 14 aufweist. Ferner hat das Verbindungsprofil 10 einen Spannhebel 16, der hier als Exzenterhebel ausgeführt ist. In Fig. 3 erkennt man angedeutet im Quersteg 15 des Längsträgers 1 einen in Längsrichtung verlaufenden Verstellschlitz 17. In diesem Verstellschlitz 17 kann der Zapfen des Spannhebels 16 am Verbindungsprofil 10 laufen. Man kann so die unvermeidbar auftretenden Anordnungstoleranzen zwischen den Längsträgern 1 zweckmäßig aufnehmen und berücksichtigen.

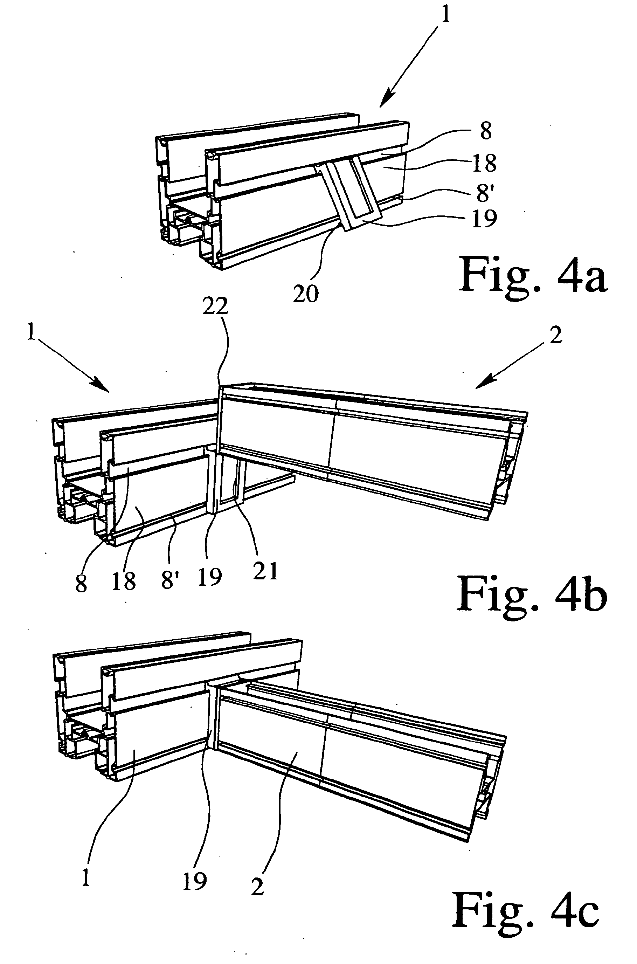

Fig. 4 der Zeichnung befasst sich mit der besonders bevorzugten Art und Weise der Verbindung der Querträger 2 mit den Längsträgern 1 bei einer erfindungsgemäßen Innenraumdecke. Diese Verbindung kann entgegen dem Stand der Technik hier werkzeuglos durchgeführt werden. Dazu ist vorgesehen, dass ein Querträger 2 mit einem Längsträger 1 jeweils mittels eines in einer außenliegenden Nut 8 an einer Seitenwange 18 des Längsträgers 1 eingehängten Seitenadapters 19, in den die Stirnseite des Querträgers 2 von oben eingeschoben ist, verbunden ist. In Fig. 4a erkennt man, wie der Seitenadapter 19 in die Systemnut 8 an der Seitenwange 18 des Längsträgers 1 eingehängt wird. Unterhalb der Systemnut 8 erkennt man eine weitere Nut 8', die eine Arretierungsleiste 20 am Seitenadapter 19 aufnimmt. Ist der Querträger 2, wie in Fig. 4b, c gezeigt, erst einmal in den Seitenadapter 19 eingehängt, so ist dieser dadurch gleichzeitig mittels der Systemnut 8 und der Arretierungsleiste 20 in der Nut 8' arretiert.

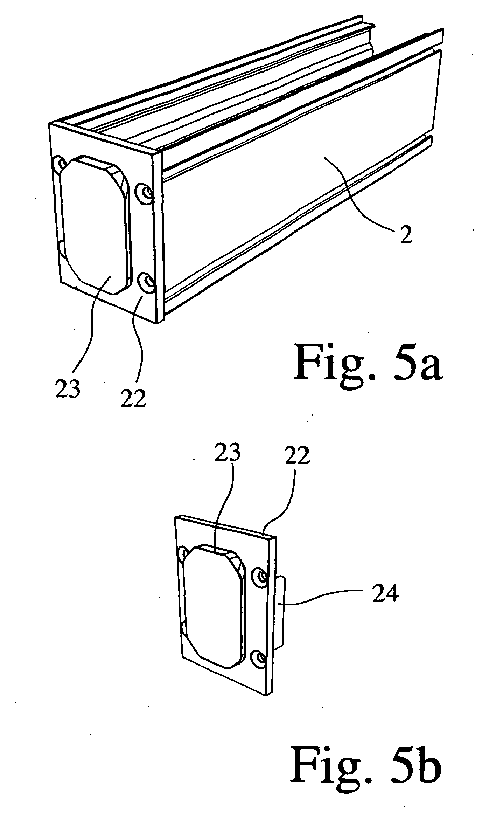

Fig. 4a und b zeigen, dass der Seitenadapter 19 eine nach oben offene Hinterschneidung 21 aufweist. Fig. 5 zeigt dazu, dass an der Stirnseite des Querträgers 2 eine Stirnplatte 22 fest angebracht, hier nämlich angeschraubt ist, die ein zur Hinterschneidung 21 am Seitenadapter 19 passendes Randprofil 23 aufweist. Das Randprofil 23 kann beispielsweise ein Schwalbenschwanzprofil sein. Wird die Stirnplatte 22 beim Einhängen des Querträgers 2 in die Hinterschneidung 21 des Seitenadapters 19 von oben her eingeführt, wie das Fig. 4b, c zeigen, so verankert sich das Randprofil 23 in der Hinterschneidung 21 und der Querträger 2 ist gegenüber dem Längsträger 1 in jeder Richtung arretiert.

Im dargestellten und bevorzugten Ausführungsbeispiel ist vorgesehen, dass der Seitenadapter 19 nicht aus Leichtmetall besteht, sondern aus faserverstärktem Kunststoff ausgeführt ist. Das ist herstellungstechnisch und montagetechnisch zweckmäßiger. Demgegenüber ist die Stirnplatte 22 als Druckgussteil aus Aluminium, ggf. mit einer Beschichtung versehen, ausgeführt.

Fig. 5b zeigt, dass wie schon beim Verbindungsprofil 10 zu Fig. 2 erläutert, auch hier beim Seitenadapter 19 und bei der Stirnplatte 22 Fasen und Abschrägungen vorhanden sind, um das Einführen der Teile ineinander zu erleichtern. Fig. 5b zeigt im übrigen noch Drehsicherungsflanken 24 an der Rückseite der Stirnplatte 22, um diese im Strangpressprofil des Querträgers 2 sauber drehsicher zu verankern. Dadurch werden die Schraubverbindungen von diesen Kräften weitgehend entlastet.

Fig. 5 lässt im übrigen weiter erkennen, dass im dargestellten und insoweit bevorzugten Ausführungsbeispiel der Querträger 2 so gestaltet ist, dass er in zwei um seine Längsachse um 180° gegeneinander gedrehten Positionen mit dem Längsträger 1 verbunden werden kann. Dazu ist im dargestellten und bevorzugten Ausführungsbeispiel vorgesehen, dass die Stirnplatte 22 am Querträger 2 spiegelsymmetrisch zu ihrer Querachse ausgeführt ist. Damit ist es möglich, wie weiter unten noch erläutert wird, den Querträger 2 in zwei unterschiedlichen Positionen zwischen den Längsträgern 1 anzuordnen. Das erhöht die Befestigungsmöglichkeiten und die Vielfalt der Nutzungsmöglichkeiten am Querträger 2.

In Fig. 3 sieht man in einer perspektivischen Ansicht von der Stirnseite her einen Längsträger 1 mit seinen bereits erwähnten einzelnen Abschnitten. Man erkennt an den Seitenwangen 18 links und rechts jeweils eine Systemnut 8 und darunter jeweils die bereits erwähnte Arretierungsnut 8'. Diese Nuten können auch für andere Zwecke, beispielsweise für Aufhängungen etc. verwendet werden. Ferner erkennt man im Mittelbereich die Hohlkammer 6, die in Verbindung mit dem Verbindungsprofil 10 bereits erläutert worden ist. Auch der Quersteg 15 mit dem Verstellschlitz 17 ist bereits erwähnt worden.

Weiter erkennt man nun, dass der Längsträger 1 eine große, nach oben offene Aufnahme 25 aufweist. Dies ist eine der bereits zu Anspruch 1 generell erwähnten Aufnahmen. Die Aufnahme 25 liegt hier in der Mitte des Längsträgers 1, dieser ist also bezogen auf die vertikale Mittelebene spiegelsymmetrisch ausgeführt

Man erkennt an den Innenrändern der oberen Aufnahme 25 Befestigungsstreifen 26, hier aus Klettband, zur werkzeuglosen Befestigung der bereits erwähnten Gewebestoffbahnen.

Weiter erkennt man seitlich neben der oberen Aufnahme 25 außenliegende Nuten 27, die ebenfalls der Anbringung von Gewebestoffbahnen dienen können, wenn man Befestigungsstreifen 26 nicht haben möchte oder mit schwereren Gewebestoffbahnen arbeitet. Diese Nuten 27 können auch für herunterhängende Stoffbahnen oder sonstige Befestigungen dienen. Im Übrigen haben diese Nuten 27 einen Nebeneffekt beim Transport von Längsträgern 1. Man erkennt an der Unterseite des Längsträgers 1 rechts und links symmetrisch angeordnete kleine Wulste 28. Diese greifen beim Aufeinanderstapeln von Längsträgern 1 in die Nuten 27 an der Oberseite ein und verhindern, dass aufeinandergestapelte Längsträger 1 seitlich gegeneinander verrutschen.

An den Innenwänden der oberen Aufnahme 25, vorzugsweise in deren unterer Hälfte, sind einander gegenüberliegende Hinterschneidungen 29 vorgesehen. Deren Funktion wird später noch genauer erläutert.

Bei der allgemeinen Darstellung der Innenraumdecke in Fig. 1 ist bereits auf die Existenz von Tragelementen 3 für den Fall der Abhängung dieser Innenraumdecke hingewiesen worden. Als Tragelemente 3 kommen alle Arten von langgestreckten Systemen in Frage, insbesondere also Gewindestangen, Gurte, Stahlseile etc..

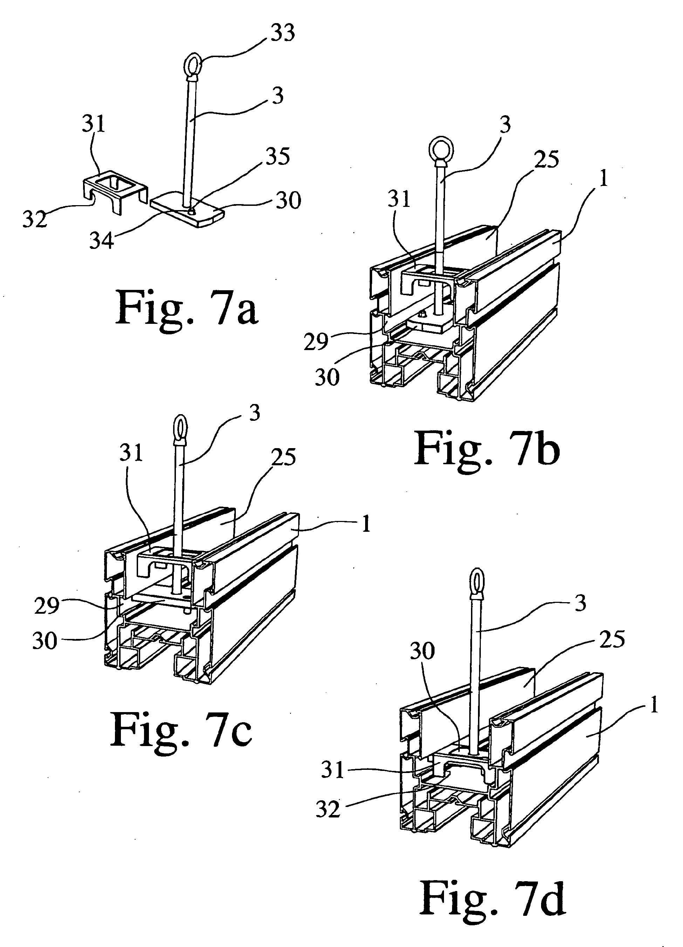

Fig. 7 mit den Teilfiguren a, b, c, d macht deutlich, dass nach einer bevorzugten und eigenständigen Lehre der Erfindung, der besondere Bedeutung zukommt, auch die Aufhängung der Längsträger 1 mittels der Tragelemente 3 im Wesentlichen werkzeuglos erfolgen kann. Dazu sind spezielle Tragelemente 3 vorgesehen. Man erkennt, dass jedes Tragelement 3 am in die obere Aufnahme 25 des Längsträgers 1 reichenden Ende einen dort drehbar angebrachten Tragnutenstein 30 aufweist. Die Längsabmessung des Tragnutensteins 30 ist kleiner als die lichte Breite der oberen Aufnahme 25 oberhalb der Hinterschneidungen 29. Die Querabmessung des Tragnutensteins 30 hingegen ist wesentlich größer als die lichte Breite der oberen Aufnahme 25 oberhalb der Hinterschneidungen 29 und kleiner als die lichte Breite in den Hinterschneidungen 29. Im Übrigen erkennt man in Fig. 7a, dass der Tragnutenstein 30 an seinen Schmalseiten einseitig abgerundet ist, um ein Hineindrehen in die Hinterschneidungen 29 zu erleichtern. Fig. 7b bis 7d machen deutlich, dass der Tragnutenstein 30 in einer Einführdrehstellung (Fig. 7b) von oben in die Aufnahme 25 einführbar ist und dann in einer dagegen um etwa 90° versetzten Haltedrehstellung (Fig. 7c) in den Hinterschneidungen 29 sicher sitzt.

Nun könnte sich der Tragnutenstein 30 aus der in Fig. 7c erkennbaren Haltedrehstellung durch Vibrationen oder andere äußere Einflüsse von selbst lösen. Um das zu verhindern, ist eine werkzeuglose Drehsicherung 31 vorgesehen, die in Fig. 7a links dargestellt ist. Die Querabmessung der Drehsicherung 31 ist nur wenig geringer als die Breite der oberen Aufnahme 25 oberhalb der Hinterschneidungen 29. Dadurch kann sich die Drehsicherung 31 in der Aufnahme 29 selbst nicht drehen. Die Drehsicherung 31 ist von oben auf den Tragnutenstein 30 aufgesetzt (Fig. 7c, 7d) und umfasst diesen in dessen Haltedrehstellung (Fig. 7d) seitlich.

Der Bereich unter dem Tragnutenstein 30 in der Aufnahme 25 oberhalb des Querstegs 15 kann als Kabelkanal genutzt werden. Hier würde die Drehsicherung 31 stören, wenn diese nicht, wie im dargestellten Ausführungsbeispiel vorgesehen, randseitig mit weiten Ausschnitten 32 versehen wäre. Die Drehsicherung 31 ist im dargestellten Ausführungsbeispiel im übrigen als abgekantetes Blechteil, vorzugsweise aus verzinktem Stahlblech ausgeführt und umfasst das Tragelement 3 von oben ganz locker. Am oberen Ende des Tragelements 3 befindet sich eine Ringöse 33, von der aus dann weitere Tragelemente zur Tragdecke verlaufen können, die hier aber nicht weiter dargestellt sind.

Aus Fig. 7a kann man im übrigen erkennen, dass nach einer weiter bevorzugten Ausführung der Tragnutenstein 30 eine Durchstecköffnung 34 oder eine entsprechende Gewindebohrung für eine Sicherungsschraube 35 oder einen Sicherungsstift aufweist. Damit kann man bei Schrägverspannung eine Fixierung des Tragelements 3 am Längsträger 1 gewährleisten, so dass das Tragelement 3 nicht verrutscht.

Wie bereits zuvor erläutert worden ist, bildet die obere Aufnahme 25 in ihrem unteren Bereich, vorzugsweise unterhalb der Hinterschneidungen 29, zweckmäßigerweise einen Kabelkanal für die Verlegung von Kabeln für die Elektrifizierung der Innenraumdecke.

Aus Fig. 3 ergibt sich ferner, dass der Längsträger 1 auch eine große, nach unten offene Aufnahme 36 aufweist. Im dargestellten und insoweit bevorzugten Ausführungsbeispiel befinden sich an den Innenwänden der unteren Aufnahme 36, vorzugsweise in deren oberer Hälfte an einem Deckensteg 37, einander gegenüberliegende Hinterschneidungen 38. Die untere Aufnahme 36 des Längsträgers 1 kann ebenfalls verschiedenen Zwecken dienen, also je nach Bedarf ganz unterschiedlich genutzt werden. Dazu befindet sich am Deckensteg 37 noch eine weitere, mittig verlaufende hinterschnittene Befestigungsnut 39 für Nutensteine, Kabelschuhe o.dgl..

Die untere Aufnahme 36, insbesondere auch in den Hinterschneidungen 38, kann auch genutzt werden, um andere Funktionen zu erfüllen. Beispielsweise kann in der unteren Aufnahme 36 eine Stromschiene eingesetzt werden, mit der Strahler mit Strom versorgt werden.

Oben ist bereits darauf hingewiesen worden, dass der Längsträger 1 in jeder Seitenwange 18 eine Systemnut 8 aufweist. Die Systemnut 8 kann genutzt werden, um mehrere Längsträger 1, die rechtwinklig aufeinanderstoßen, miteinander zu verbinden.

Fig. 6 zeigt einen Querträger 2 in einer Fig. 3 für den Längsträger 1 ähnlichen Darstellung. Am hinteren Ende des in Fig. 6 dargestellten Querträgers 2 erkennt man angedeutet die dortige Stirnplatte 22.

Auch der Querträger 2 hat eine vorzugsweise in der Mitte liegende, große, nach oben offene Aufnahme 47. Vorzugsweise mittig im Bodensteg 48 der oberen Aufnahme 47 befindet sich eine Befestigungsnut 50 zur Aufnahme von Nutensteinen für Transformatoren, Kabelbefestigungen etc.. Das entspricht etwa der Befestigungsnut 39 in der unteren Aufnahme 36 des Längsträgers 1.

In Fig. 6 erkennt man gut die Einschraubkanäle 9 sowie an jeder Seitenwange 51 mindestens eine außenliegende, hinterschnittene Nut 52, hier genau zwei dem oberen und dem unteren Rand benachbarte Nuten 52. Diese dienen zur Anbringung diverser Anbauteile. Sie fallen unter die Anfangsdefinition der Nuten 8.

Fig. 6 lässt ferner erkennen, dass der Querträger 2 auch eine ebenso in der Mitte liegende, große, nach unten offene Aufnahme 53 aufweist. Im dargestellten Ausführungsbeispiel ist also der Querträger 2 ebenso wie der Längsträger 1 bezogen auf die Mittelebene spiegelsymmetrisch ausgeführt Die untere Aufnahme 53 kann ebenfalls für unterschiedliche Aufgaben genutzt werden. Man kann dort mit Stromschienen und auch dort mit werkzeugloser Montage arbeiten. In Fig. 8 erkennt man, dass hier in einem Deckensteg 54 der unteren Aufnahme 53 Anschlüsse für Strahler vorgesehen sind. Im dargestellten Ausführungsbeispiel sind die Anschlüsse gleichmäßig verteilt über die Länge des Querträgers 2 angeordnet. Hier sind diese Anschlüsse als Steckaufnahmen 55 für insoweit steckbare Strahlerträger 56 ausgeführt.

Generell gilt, dass Strahler an den Längsträgern 1 und/oder an den Querträgern 2 an Stromschienen oder anderweitigen Anschlüssen, beispielsweise eben den zuvor erläuterten Steckaufnahmen 55, angebracht werden können.

Mit der vorliegenden Erläuterung des Querträgers 2 wird deutlich, dass dessen Wendbarkeit, die zuvor beschrieben worden ist, besondere Bedeutung zukommt. In der in Fig. 6 und 8 dargestellten, normalen Ausrichtung des Querträgers 2 kann mit den Steckaufnahmen 55 im Deckensteg 54 der unteren Aufnahme 53 gearbeitet werden. Wendet man den Querträger 2 um 180° um seine Längsachse, so weist die obere Aufnahme 47 nach unten. In der Befestigungsnut 50 des Stegs 48 kann man eine Stromschiene verankern, an der dann entsprechende Strahler angebracht werden.

In Fig. 6 erkennt man im übrigen obere und untere Randstege, die so positioniert sind, dass sie bei der Stapelung der Querträger 2 übereinander ineinander greifen und eine Sicherung gegen seitliches Verrutschen bilden.

Man erkennt bei genauem Hinsehen in Fig. 3 im Vergleich mit Fig. 6 im übrigen, dass die lichte Breite der oberen Aufnahme 47 des Querträgers 2 und evtl. angrenzende Außenbreiten gleich der lichten Breite der unteren Aufnahme 36 des Längsträgers 1 und dessen evtl. angrenzende Außenbreiten ist. In der gegenüber Fig. 6 gewendeten Stellung kann man also an der Unterseite für Längsträger 1 und Querträger 2 einheitliche Bedingungen vorfinden, was gelegentlich von Nutzen ist.

Natürlich können die Längsträger 1 und die Querträger 2 im Rahmen statischer Berechnungen zulässige, im übrigen im wesentlichen beliebige Abmessungen, insbesondere Wandstärken etc. haben. Um eine Vorstellung von in der Praxis relevanten Maßen zu haben ist festzuhalten, dass im dargestellten und bevorzugten Ausführungsbeispiel vorgesehen ist, dass die Breite der Längsträger 1 ca. 100 bis 120 mm beträgt und/oder dass die Höhe der Längsträger 1 ca. 110 bis 130 mm beträgt und/oder dass die Länge der Längsträger 1 mehrere m, vorzugsweise ca. 6 Meter, beträgt. In entsprechender Weise gilt für die Querträger 2, dass die Breite der Querträger 2 ca. 50 bis 70 mm beträgt und/oder dass die Höhe der Querträger 2 ca. 70 bis 90 mm beträgt und/oder dass die Länge der Querträger 2 mehrere Meter, vorzugsweise ca. 3 m, beträgt, also das Achsmaß der Innenraumdecke ca. 3 m beträgt.

Gegenstand der Erfindung ist nicht nur die Innenraumdecke, die zuvor in allen Einzelheiten beschrieben worden ist, sondern auch ein entsprechend angepasster Längsträger für eine solche Innenraumdecke.

## Patentansprüche

1. Abhängbare, nicht tragende Innenraumdecke, mit
eine Längsrichtung der Decke definierenden Längsträgern (1) und
eine Querrichtung der Decke definierenden, die Längsträger (1) seitlich verbindenden Querträgern (2),
wobei die Querträger (2) von den Längsträgern (1) getragen werden und
wobei, vorzugsweise, zur Abhängung der Längsträger (1) von einer Tragdecke langgestreckte Tragelemente (3) vorgesehen sind,
wobei die Längsträger (1) und die Querträger (2) als Strangpreßprofile aus Leichtmetall, insbesondere Aluminium oder aus einem faserverstärkten Kunststoff ausgeführt sind, die einerseits geschlossene Hohlkammern (6) zur Versteifung, andererseits nach außen offene Aufnahmen (7) und Nuten (8) zur Anbringung von Montage- und Zusatzteilen bzw. zu Verbindungszwecken aufweisen, und
**dadurch gekennzeichnet,**
**daß** der Längsträger (1) eine vorzugsweise in der Mitte liegende, große, nach oben offene Aufnahme (25) aufweist, die in ihrem unteren Bereich einen Kabelkanal bildet.

2. Innenraumdecke nach Anspruch 1, **dadurch gekennzeichnet,**
**dass** an den Innenwänden der oberen Aufnahme (25) des Längsträgers (1), vorzugsweise in deren unterer Hälfte, einander gegenüberliegende Hinterschneidungen (29) vorgesehen sind und dass der Kabelkanal unterhalb der Hinterschneidungen (29) gebildet ist

3. Innenraumdecke nach Anspruch 1 oder 2, **dadurch gekennzeichnet,**
**dass** an den Innenrändern der oberen Aufnahme (25) des Längsträgers (1) Befestigungsstreifen (26), insbesondere aus Klettband, zur werkzeuglosen Befestigung von Gewebestoffbahnen (4) vorgesehen sind.

4. Innenraumdecke nach einem der Ansprüche 1 bis 3, **dadurch gekennzeichnet,**
**dass** seitlich neben der oberen Aufnahme (25) des Längsträgers (1) außenliegende Nuten (27) insbesondere zur Anbringung von Gewebestoffbahnen vorgesehen sind.

5. Innenraumdecke nach einem der Ansprüche 1 bis 4, **dadurch gekennzeichnet,**
**dass** der Längsträger (1) eine vorzugsweise in der Mitte liegende, große, nach unten offene Aufnahme (36) aufweist,
wobei, vorzugsweise, an den Innenwänden der unteren Aufnahme (36) des Längsträgers (1), vorzugsweise in deren oberer Hälfte an einem Deckensteg (37), einander gegenüberliegende Hinterschneidungen (38) vorgesehen sind, und wobei, weiters vorzugsweise, in der unteren Aufnahme (36) des Längsträgers (1), insbesondere in den Hinterschneidungen (38), eine Stromschiene eingesetzt ist.

6. Innenraumdecke nach einem der Ansprüche 1 bis 5, **dadurch gekennzeichnet,**
**dass** der Längsträger (1) an jeder Seitenwange (18) mindestens eine außenliegende, hinterschnittene Nut (8) aufweist, die zur Anbringung diverser Anbauteile dient, wobei vorzugsweise zwei Längsträger (1) im rechten Winkel jeweils mittels eines in die aneinander stoßenden außenliegenden Nuten (8) eingesteckten und darin verspannten Eckverbinders (46) verbunden sind.

7. Innenraumdecke nach einem der Ansprüche 1 bis 6, **dadurch gekennzeichnet,**
**dass** der Querträger (2) eine vorzugsweise in der Mitte liegende, große, nach oben offene Aufnahme (47) aufweist.
wobei, vorzugsweise, mittig in einem Bodensteg (48) der oberen Aufnahme (47) eine Befestigungsnut (50) zur Aufnahme von Nutensteinen für Trafos, Kabelbefestigungen etc. vorgesehen ist.

8. Innenraumdecke den Ansprüchen 5 und 7, **dadurch gekennzeichnet,**
**dass** die lichte Breite der oberen Aufnahme (47) des Querträgers (2) und evtl. angrenzende Außenbreiten gleich der lichten Breite der unteren Aufnahme (36) des Längsträgers (1) und evtl. angrenzender Außenbreiten ist.

9. Innenraumdecke nach einem der Ansprüche 1 bis 8, **dadurch gekennzeichnet,**
**dass** die Breite der Längsträger (1) ca. 100 bis 120 mm beträgt und/oder
**dass** die Höhe der Längsträger (1) ca. 110 bis 130 mm beträgt und/oder
**dass** die Länge der Längsträger (1) mehrere Meter, vorzugsweise ca. 6 Meter, beträgt.

10. Innenraumdecke nach einem der Ansprüche 1 bis 9, **dadurch gekennzeichnet,**
**dass** die Breite der Querträger (2) ca. 50 bis 70 mm beträgt und/oder
**dass** die Höhe der Querträger (2) ca. 70 bis 90 mm beträgt und/oder
**dass** die Länge der Querträger (2) mehrere Meter, vorzugsweise ca. 3 m, beträgt, also das Achsmaß der Innenraumdecke ca. 3 m beträgt.

11. Längsträger für eine Innenraumdecke nach einem der Ansprüche 1 bis 10,
ausgeführt als Strangpressprofil aus Leichtmetall, insbesondere Aluminium, oder aus einem faserverstärkten Kunststoff,
wobei das Strangpressprofil einerseits geschlossene Hohlkammern (6) zur Versteifung, andererseits nach außen offene Aufnahmen (7) und Nuten (8) zur Anbringung von Montage- und Zusatzteilen aufweist,
wobei der Längsträger (1) eine vorzugsweise in der Mitte liegende, große, nach oben offene Aufnahme (25) aufweist,**dadurch gekennzeichnet**,
das die obere Aufnahme (25) in ihrem unteren Bereich einen Kabelkanal bildet.

12. Längsträger nach Anspruch 11, **dadurch gekennzeichnet,**
**dass** an den Innenwänden der oberen Aufnahme (25) einander gegenüberliegende Hinterschneidungen (29) vorgesehen sind und der Kabelkanal unterhalb der Hinterschneidungen (29) gebildet ist und/oder
**dass** an den Innenrändern der oberen Aufnahme (25) des Längsträgers (1) Befestigungsstreifen (26), insbesondere aus Klettband, zur werkzeuglosen Befestigung von Gewebestoffbahnen (4) vorgesehen sind und/oder
das seitlich neben der oberen Aufnahme (25) außenliegende Nuten (27) insbesondere zur Anbringung von Gewebestoffbahnen vorgesehen sind.

13. Längsträger nach Anspruch 11 oder 12, **dadurch gekennzeichnet,**
**dass** der Längsträger (1) eine vorzugsweise in der Mitte liegende, große, nach unten offene Aufnahme (36) aufweist,
wobei, vorzugsweise, an den Innenwänden der unteren Aufnahme (36) einander gegenüberliegende Hinterschneidungen (38) vorgesehen sind und wobei, weiters vorzugsweise, in der unteren Aufnahme (36), insbesondere in den Hinterschneidungen (38), eine Stromschiene eingesetzt ist.

14. Längsträger nach einem der Ansprüche 11 bis 13, **dadurch gekennzeichnet,**
**dass** der Längsträger (1) an jeder Seitenwange (18) mindestens eine außen liegende, hinterschnitte Nut (8) aufweist, die zur Anbringung diverser Anbauteile dient.

15. Längsträger nach einem der Ansprüche 11 bis 14, **dadurch gekennzeichnet,**
**dass** die Breite des Längsträgers (1) ca. 100 bis 120 mm beträgt und/oder
**dass** die Höhe des Längsträgers (1) ca. 110 bis 130 mm beträgt und/oder
**dass** die Länge des Längsträgers (1) mehrere Meter, vorzugsweise ca. 6 Meter, beträgt.

## Claims

1. Hangable, non-supporting interior ceiling with longitudinal members (1) which define a longitudinal direction of the ceiling and crossmembers (2) which define a transverse direction of the ceiling and laterally connect the longitudinal members (1), wherein the crossmembers (2) are supported by the longitudinal members (1) and wherein, preferably, elongate supporting elements (3) are provided to hang the longitudinal members (1) from a supporting ceiling, wherein the longitudinal members (1) and the crossmembers (2) are designed as extruded profiles of lightweight metal, in particular aluminium, or of a fibre-reinforced plastic, which extruded profiles, on the one hand, have closed hollow chambers (6) for stiffening purposes, and, on the other hand, outwardly open receptacles (7) and grooves (8) for fitting installation parts and additional parts and for connecting purposes, and **characterized in that** the longitudinal member (1) has a large, upwardly open receptacle (25) which is preferably situated in the centre and which forms a cable duct in its lower region.

2. Interior ceiling according to Claim 1, **characterized in that** mutually opposite undercuts (29) are provided on the inner walls of the upper receptacle (25) of the longitudinal member (1), preferably in the lower half thereof, and **in that** the cable duct is formed below the undercuts (29).

3. Interior ceiling according to Claim 1 or 2, **characterized in that** fastening strips (26), in particular of Velcro tape, for the tool-free fastening of fabric sheets (4) are provided on the inner edges of the upper receptacle (25) of the longitudinal member (1) .

4. Interior ceiling according to one of Claims 1 to 3, **characterized in that** external grooves (27), in particular for fitting fabric sheets, are provided laterally next to the upper receptacle (25) of the longitudinal member (1).

5. Interior ceiling according to one of Claims 1 to 4, **characterized in that** the longitudinal member (1) has a large, downwardly open receptacle (36) situated preferably in the centre, wherein, preferably, mutually opposite undercuts (38) are provided on the inner walls of the lower receptacle (36) of the longitudinal member (1), preferably in the upper half thereof on a cover web (37), and wherein, further preferably, a busbar is inserted in the lower receptacle (36) of the longitudinal member (1), in particular in the undercuts (38).

6. Interior ceiling according to one of Claims 1 to 5, **characterized in that** the longitudinal member (1) has, on each side wall (18), at least one external, undercut groove (8) which serves for fitting various attachment parts, wherein preferably two longitudinal members (1) are connected at a right angle in each case by means of a corner connecter (46) which is inserted into the mutually abutting external grooves (8) and clamps therein.

7. Interior ceiling according to one of Claims 1 to 6, **characterized in that** the crossmember (2) has a large, upwardly open receptacle (47) preferably situated in the centre, wherein, preferably, a fastening groove (50) for receiving sliding blocks for transformers, cable fastenings etc. is provided in the centre of a bottom web (48) of the upper receptacle (47) .

8. Interior ceiling according to Claims 5 and 7, **characterized in that** the clear width of the upper receptacle (47) of the crossmember (2) and possibly adjoining outer widths is equal to the clear width of the lower receptacle (36) of the longitudinal member (1) and possible adjoining outer widths.

9. Interior ceiling according to one of Claims 1 to 8, **characterized in that** the width of the longitudinal members (1) is about 100 to 120 mm and/or **in that** the height of the longitudinal members (1) is about 110 to 130 mm and/or **in that** the length of the longitudinal members (1) is a plurality of meters, preferably about 6 meters.

10. Interior ceiling according to one of Claims 1 to 9, **characterized in that** the width of the crossmembers (2) is about 50 to 70 mm and/or **in that** the height of the crossmembers (2) is about 70 to 90 mm and/or **in that** the length of the crossmembers (2) is a plurality of meters, preferably about 3 m, that is to say the axial dimension of the interior ceiling is about 3 m.

11. Longitudinal member for an interior ceiling according to one of Claims 1 to 10, designed as an extruded profile of lightweight metal, in particular aluminium, or of a fibre-reinforced plastic, wherein the extruder profile has, on the one hand, closed hollow chambers (6) for stiffening purposes, and, on the other hand, outwardly open receptacles (7) and grooves (8) for fitting installation parts and additional parts, wherein the longitudinal member (1) has a large, upwardly open receptacle (25) preferably situated in the centre, **characterized in that** the upper receptacle (25) forms a cable duct in its lower region.

12. Longitudinal member according to Claim 11, **characterized in that** mutually opposite undercuts (29) are provided on the inner walls of the upper receptacle (25) and the cable duct is formed below the undercuts (29) and/or **in that** fastening strips (26), in particular of Velcro tape, for the tool-free fastening of fabric sheets (4) are provided on the inner edges of the upper receptacle (25) of the longitudinal member (1) and/or **in that** external grooves (27), in particular for fitting fabric sheets, are provided laterally next to the upper receptacle (25).

13. Longitudinal member according to Claim 11 or 12, **characterized in that** the longitudinal member (1) has a large, downwardly open receptacle (36) preferably situated in the centre, wherein, preferably, mutually opposite undercuts (38) are provided on the inner walls of the lower receptacle (36) and wherein, further preferably, a busbar is inserted in the lower receptacle (36), in particular in the undercuts (38).

14. Longitudinal member according to one of Claims 11 to 13, **characterized in that** the longitudinal member (1) has, on each sidewall (18), at least one external, undercut groove (8) which serves for fitting various attachment parts.

15. Longitudinal member according to one of Claims 11 to 14, **characterized in that** the width of the longitudinal member (1) is about 100 to 120 mm and/or in that the height of the longitudinal member (1) is about 110 to 130 mm and/or **in that** the length of the longitudinal member (1) is a plurality of meters, preferably about 6 meters.

## Revendications

1. Plafond intérieur pouvant être suspendu non porteur comprenant des longerons (1) définissant une direction longitudinale du plafond et des traverses (2) reliant latéralement les longerons (1) et définissant une direction transversale du plafond,
les traverses (2) étant portées par les longerons (1) et, de préférence, pour la suspension des longerons (1) depuis un plafond porteur, des éléments de support allongés (3) étant prévus,
les longerons (1) et les traverses (2) étant réalisés sous forme de profilés filés en métal léger, en particulier en aluminium ou en un plastique renforcé par des fibres, qui présentent d'une part des cavités creuses fermées (6) pour la rigidification et d'autre part des logements ouverts vers l'extérieur (7) et des rainures (8) pour l'installation de pièces de montagne et de pièces supplémentaires ou à des fins de connexion, et
**caractérisé en ce que**
le longeron (1) présente un logement (25) ouvert vers le haut, de grande taille et de préférence situé centralement, qui forme dans sa région inférieure un passage de câbles.

2. Plafond intérieur selon la revendication 1, **caractérisé en ce que** des contre-dépouilles (29) mutuellement opposées sont prévues au niveau des parois internes du logement supérieur (25) du longeron (1), de préférence dans sa moitié inférieure, et **en ce que** le passage de câbles est formé en dessous des contre-dépouilles (29).

3. Plafond intérieur selon la revendication 1 ou 2, **caractérisé en ce que** des bandes de fixation (26), en particulier en velcro, sont prévues pour la fixation sans outil de bandes de tissu (4) au niveau des bords internes du logement supérieur (25) du longeron (1).

4. Plafond intérieur selon l'une quelconque des revendications 1 à 3, **caractérisé en ce que** des rainures (27) situées à l'extérieur latéralement à côté du logement supérieur (25) du longeron (1) sont notamment prévues pour l'installation de bandes de tissu.

5. Plafond intérieur selon l'une quelconque des revendications 1 à 4, **caractérisé en ce que** le longeron (1) présente un logement ouvert vers le bas (36), de grande taille, de préférence situé centralement, des contre-dépouilles (38) mutuellement opposées étant de préférence prévues au niveau des parois internes du logement inférieur (36) du longeron (1), de préférence dans sa moitié supérieure au niveau d'une nervure de plafond (37), et une barre omnibus étant de préférence en outre insérée dans le logement inférieur (36) du longeron (1), en particulier dans les contre-dépouilles (38).

6. Plafond intérieur selon l'une quelconque des revendications 1 à 5, **caractérisé en ce que** le longeron (1), au niveau de chaque paroi latérale (18), présente au moins une rainure en contre-dépouille (8) située à l'extérieur, qui sert à l'installation de diverses pièces de montage, deux longerons (1) étant de préférence connectés à angle droit à chaque fois au moyen d'un connecteur en coin (46) enfiché et serré dans les rainures (8) en butée les unes contre les autres et situées à l'extérieur.

7. Plafond intérieur selon l'une quelconque des revendications 1 à 6, **caractérisé en ce que** la traverse (2) présente un logement ouvert vers le haut (47), de grande taille, de préférence situé centralement, une rainure de fixation (50) pour recevoir des coulisseau pour des transformateurs, des fixations de câble, etc. étant de préférence prévue centralement dans une nervure de fond (48) du logement supérieur (47).

8. Plafond intérieur selon les revendications 5 et 7, **caractérisé en ce que** la largeur intérieure du logement supérieur (47) de la traverse (2) et éventuellement des largeurs extérieures adjacentes sont égales à la largeur intérieure du logement inférieur (36) du longeron (1) et éventuellement des largeurs extérieures adjacentes.

9. Plafond intérieur selon l'une quelconque des revendications 1 à 8, **caractérisé en ce que** la largeur des longerons (1) vaut environ 100 à 120 mm et/ou **en ce que** la hauteur des longerons (1) vaut environ 110 à 130 mm et/ou **en ce que** la longueur des longerons (1) est de plusieurs mètres, de préférence d'environ 6 mètres.

10. Plafond intérieur selon l'une quelconque des revendications 1 à 9, **caractérisé en ce que** la largeur des traverses (2) vaut environ 50 à 70 m et/ou **en ce que** la hauteur des traverses (2) vaut environ 70 à 90 mm et/ou **en ce que** la longueur des traverses (2) est de plusieurs mètres, de préférence d'environ 3 m, et donc que la dimension de trame du plafond intérieur est d'environ 3 m.

11. Longeron pour un plafond intérieur selon l'une quelconque des revendications 1 à 10, réalisé en tant que profilé filé en métal léger, en particulier en aluminium ou en un plastique renforcé par des fibres, le profilé filé présentant d'une part des cavités creuses fermées (6) pour la rigidification et d'autre part des logements ouverts vers l'extérieur (7) et des rainures (8) pour l'installation de pièces de montage et de pièces supplémentaires, le longeron (1) présentant un logement (25) ouvert vers le haut, de grande taille et de préférence situé centralement, **caractérisé en ce que** le logement supérieur (25) forme, dans sa région inférieure, un passage de câbles.

12. Longeron selon la revendication 11, **caractérisé en ce que** des contre-dépouilles mutuellement opposées (29) sont prévues au niveau des parois internes du logement supérieur (25) et **en ce que** le passage de câbles est formé en dessous des contre-dépouilles (29) et/ou **en ce que** des bandes de fixation (26), en particulier en velcro, sont prévues pour la fixation sans outil de bandes de tissu (4) au niveau des bords internes du logement supérieur (25) du longeron (1) et/ou **en ce que** des rainures (27) situées à l'extérieur latéralement à côté du logement supérieur (25) sont notamment prévues pour l'installation de bandes de tissu.

13. Longeron selon la revendication 11 ou 12, **caractérisé en ce que** le longeron (1) présente un logement ouvert vers le bas (36), de grande taille, de préférence situé centralement, des contre-dépouilles (38) mutuellement opposées étant de préférence prévues au niveau des parois internes du logement inférieur (36), et une barre omnibus étant de préférence en outre insérée dans le logement inférieur (36), en particulier dans les contre-dépouilles (38).

14. Longeron selon l'une quelconque des revendication 11 à 13, **caractérisé en ce que** le longeron (1), au niveau de chaque paroi latérale (18), présente au moins une rainure en contre-dépouille (8) située à l'extérieur, qui sert à l'installation de diverses pièces de montagne

15. Longeron selon l'une quelconque des revendications 11 à 14, **caractérisé en ce que** la largeur du longeron (1) vaut environ 100 à 120 mm et/ou **en ce que** la hauteur du longeron (1) vaut environ 110 à 130 mm et/ou **en ce que** la longueur du longeron (1) est de plusieurs mètres, de préférence d'environ 6 mètres.
